# EUROPÄISCHE PATENTANMELDUNG

(11) **EP 3 407 680 A1**
(43) Veröffentlichungstag der Anmeldung: **28.11.2018**
(21) Anmeldenummer: 18166005.1
(22) Anmeldetag: 06.04.2018
(51) Int. Cl.: H05B 6/68, H05B 6/70, H01P 5/107

(54) **EINRICHTUNG ZUR ERZEUGUNG UND TRANSMISSION VON HOCHFREQUENZWELLEN (HF-WELLEN)**

(30) Priorität: 24.05.2017 DE 102017111319
(71) Anmelder: Miele & Cie. KG, 33332 Gütersloh (DE)
(72) Erfinder: Wixforth, Thomas, 33330 Gütersloh (DE); Kersting, Andre, 59329 Wadersloh (DE)

(57) **Zusammenfassung**

Die Erfindung betrifft eine Einrichtung zur Erzeugung und Transmission von Hochfrequenz- (HF) -Wellen (44), die durch eine HF-Erzeugungseinheit (3) erzeugt werden und die über einen Hohlleiter (4) in den Behandlungsraum eines Gerätes geleitet werden, um darin befindliches Behandlungsgut mit Mikrowellenenergie zu beaufschlagen.
Erfindungsgemäß ist die Einrichtung derart ausgebildet,
- dass diese eine Leiterplatte (12) und einen Hohlleiter (4) umfasst,
- dass der Hohlleiter (4) von einem Gehäuse aus Metall gebildet wird, welches mindestens zwei Gehäuseteile (41, 42) aufweist und wobei das Gehäuse des Hohlleiters (4) mit der Leiterplatte (12) verbunden ist,
- dass auf der Leiterplatte (12) eine einen Leistungstransistor (31) umfassende Schaltungsanordnung zur Erzeugung von HF-Wellen (44) sowie eine in den Hohlleiter (4) führende HF-Leitungsstruktur angeordnet ist,
- dass die HF-Leitungsstruktur eine HF-Übergangsstruktur aufweist, die einen Leiterplattenleitungsmode in einen Hohlleitermode überführt, um HF-Wellen (44) in den Hohlleiter (4) einzuleiten,
und dass die Leiterplatte (12) mit der HF-Übergangsstruktur zwischen den Gehäuseteilen (41, 42, 45) des Hohlleiters (4) platziert ist.

Durch eine derart ausgebildete Einrichtung wird der Vorteil erzielt, dass die mit Leistungstransistoren erzeugte Energie bzw. Leistung von HF-Wellen effizient, robust und verlustarm in Richtung eines Behandlungsraumes geleitet werden kann.

## Beschreibung

Die Erfindung betrifft eine Einrichtung zur Erzeugung und Transmission von Hochfrequenzwellen (HF-Wellen), die von einer HF-Erzeugungseinheit generiert werden und die über einen Hohlleiter in den Behandlungsraum eines Gerätes geleitet werden, um darin befindliches Behandlungsgut mit Mikrowellenenergie zu beaufschlagen.

Bekanntlich werden Mikrowellen und die entsprechende Hochfrequenztechnik schon seit langem in Mikrowellenherden dazu benutzt, um im Haushaltsbereich und gewerblich genutzten Bereichen Nahrungsmittel zu erhitzen. Weiterhin wird die Mikrowellentechnik auch auf anderen industriellen und medizinischen Gebieten eingesetzt, wobei für derartige Nutzungszwecke besondere Frequenzbereiche freigegeben sind. Zum Beispiel gibt es hierfür ein ISM-Band von 902 bis 928 oder ein weiteres von 2400 bis 2500 MHz.

Bei den herkömmlichen Mikrowellenherden werden die erforderlichen, leistungsstarken Mikrowellen mit Hilfe eines Magnetrons (Mikrowellenelektronenröhre) erzeugt und mittels eines Hohlleiters in den Garraum eines Gargerätes geleitet. Ein Nachteil bei der Verwendung eines Magnetrons besteht u.a. darin, dass ein hoher gerätetechnischer Aufwand für die Hochfrequenzerzeugung betrieben werden muss und dass trotzdem gewisse, nicht unbeachtliche Schwächen dieser Technik in Kauf genommen werden müssen. Ein wesentliches Problem besteht dabei beispielsweise darin, dass sich der Garvorgang nicht optimal steuern bzw. regeln lässt und dass sich unterschiedliche Garzustände im Gargut nicht vermeiden lassen.

Aus diesem Grunde gehen seit einiger Zeit die Bestrebungen und entsprechende Vorschläge dahin, auf Magnetrons zu verzichten und für die Mikrowellenerzeugung Leistungshalbleiter einzusetzen (siehe Elektronik 17/2016, Seite 40 ff: "Moderne Funktechnik zum Kochen"). Hierzu kann die inzwischen sehr weit fortgeschrittene Entwicklung auf dem Gebiete von Hochleistungshalbleitern genutzt werden, wobei die notwendige Mikrowellenenergie in der Endstufe einer Hochfrequenz-Erzeugereinheit von einem Leistungstransistor abgegeben wird.

Ein Nachteil bei den bisher bekannt gewordenen Ausführungsformen mit der durch Leistungshalbleiter erzeugten Mikrowellenenergie besteht darin, dass für die Transmission der Hochfrequenzenergie vom Endstufentransistor zum Garraum kostenträchtige und zum Teil verlustbehaftete Koaxialkabel und Koaxialkonnektoren verwendet werden müssen.

Der Erfindung stellt sich somit das Problem eine Einrichtung zur Hochfrequenzerzeugung und zur Transmission von Mikrowellen an das jeweilige Behandlungsgut bereitzustellen, durch die die vorstehend genannten Nachteile vermieden werden können und die kostengünstig realisierbar ist.

Erfindungsgemäß wird dieses Problem durch eine Einrichtung zur Hochfrequenzerzeugung und zur Transmission von Mikrowellen mit den Merkmalen des Patentanspruchs 1 gelöst. Vorteilhafte Ausgestaltungen und Weiterbildungen der Erfindung ergeben sich aus den nachfolgenden Unteransprüchen.

Mit Patentanspruch 13 wird ein Gerät für verschiedene Anwendungsbereiche unter Schutz gestellt, welches mit den Merkmalen der erfindungsgemäßen Einrichtung ausgebildet ist.

Weiterhin ist in Patentanspruch 14 ein Verfahren zur Steuerung und zum Betreiben einer erfindungsgemäß ausgebildeten Einrichtung zur Erzeugung und Transmission von Hochfrequenz-(HF) -Wellen (44) angegeben.

Die Erfindung lässt sich in vorteilhafter Weise insbesondere für alle Gargeräte einsetzen, bei denen das zu behandelnde Gut mit Mikrowellenenergie beaufschlagt werden soll, wie beispielsweise zum Garen, Erhitzen und zum Auftauen von Nahrungsmitteln.

Die Erfindung ist aber nicht auf diese Anwendungsfälle beschränkt, da sich die damit erzielbaren Vorteile auch für andere Behandlungsprozesse nutzen lassen, bei denen durch die Applikation von Hochfrequenzenergie auf ein Behandlungsgut Einfluss genommen werden soll, wie zum Beispiel für das Trocknen von Wäsche. Außerdem sind Anwendungsmöglichkeiten in medizinischen Bereichen denkbar, in denen in bekannter Weise Mikrowellenenergie für bestimmte Anwendungen eingesetzt wird.

Die mit der Erfindung ganz allgemein erzielbaren Vorteile bestehen insbesondere darin, dass die mit Leistungstransistoren erzeugte Energie bzw. Leistung von HF-Wellen effizient, robust und verlustarm in Richtung eines Behandlungsraumes geleitet werden kann, der beispielsweise der Garraum eines Gargerätes zum Aufbereiten und Garen von Nahrungsmitteln sein kann. Ermöglicht wird dies durch eine kostengünstig herstellbare Einrichtung zur Erzeugung und Transmission von Hochfrequenzwellen (HF-Wellen), die von einer mit Leistungshalbleitern ausgerüsteten HF-Erzeugungseinheit generiert werden, über eine erfindungsgemäß ausgebildete Leiterplattenstruktur in einen Hohlleiter und von dort in den Behandlungsraum eines Gerätes geleitet werden, um das darin befindliche Behandlungsgut mit Mikrowellenenergie zu beaufschlagen.

Auf einer Leiterplatte ist neben der Anordnung von HF-Schaltungen, HF-Leitungen, HF-Layout-Strukturen für die Hochfrequenzerzeugung auch eine Anordnung einer in den Hohlleiter führenden HF-Leitungsstruktur vorgesehen, mittels der eine HF-Übergangsstruktur gebildet wird, durch die der Übergang von einem Leiterplattenleitungsmode in einen Hohlleitermode erfolgt.

Der Hohlleiter weist ein Gehäuse aus Metall in einer rechteckigen, kanalförmigen Aufbauform auf, welches von mindestens zwei Gehäuseteilen gebildet wird. Die Gehäuseteile können dabei in einfacher Weise als Blechteile im Stanzbiegeverfahren hergestellt werden. Die Leiterplatte mit der HF-Übergangsstruktur wird zwischen den beiden Gehäuseteilen erfindungsgemäß derart platziert, dass der die HF-Übergangsstruktur tragende Teil der Leiterplatte von den beiden Gehäuseteilen umschlossen wird. Das von den Gehäuseteilen gebildete Hohlleitergehäuse kann in verschiedenen Aufbauformen realisiert werden. So besteht insbesondere auch die Möglichkeit, die Gehäuseteile oder bestimmte Teile an einem Gehäuseteil mit einem Kühlelement zu versehen, damit eine ausreichende Wärmeabfuhr an kritischen Stellen der Baugruppe erfolgen kann. Dabei kann in vorteilhafter Ausgestaltung ein Gehäuseteil des Hohlleiters und ein Kühlkörper in einer einteiligen Form ausgebildet werden.

Weiterhin kann die Ausbildung der HF-Übergangsstruktur auf der Leiterplatte durch verschiedene Ausgestaltungsvarianten realisiert werden, um die HF-Wellen in den Hohlleiter abstrahlen bzw. einleiten zu können.

In einer ersten Ausführungsform ist vorgesehen, zur Einleitung der HF-Wellen in den Hohlleiter ein Abstrahlelement mit einer monopolartigen Leiterstruktur und eine zu dem Abstrahlelement führende Leiterplattenleitung zu verwenden.

Bei einer weiteren Ausführungsform ist zur Einleitung der HF-Wellen in den Hohlleiter das Abstrahlelement mit einer dipolartigen Leiterstruktur ausgebildet und die zu dem Abstrahlelement führende Streifenleitung führt einen symmetrischen Leiterplattenleitungsmode. Weiterhin kann das Abstrahlelement in einer schleifenartigen Leiterstruktur nach Art einer Drahtschleife geformt sein, wobei die Leiterplattenleitung zu dem Abstrahlelement ebenfalls einen symmetrischen Leiterplattenleitungsmode führt. Die symmetrische Leiterplattenleitung kann in den beiden vorgenannten Fällen auch differentiell ausgebildet sein.

Eine besonders vorteilhafte Weiterbildung der vorbeschriebenen erfindungsgemäßen Grundstruktur lässt sich dadurch realisieren, dass im Hohlleiter eine Messvorrichtung integriert wird, die mindestens zwei Erfassungselemente zur Messung vorwärts und rückwärts gerichteter HF-Wellen umfasst. Die Erfassungselemente üben dabei quasi die Funktion von Empfangsantennen aus. Damit können die für die Mikrowellenbehandlung vorgesehenen, vorwärts gerichteten HF-Wellen und die aufgrund von Reflexionen aus dem Behandlungsraum rückwärts laufenden HF-Wellen nach Betrag und Phase erfasst und ausgewertet werden. Die beiden Erfassungselemente werden von zwei monopolartigen Leiterstrukturen auf der Leiterplatte gebildet.

Die Erfassungselemente stehen jeweils über eine in den Hohlleiter führende Leiterplattenleitung mit einer Auswerte- und Steuereinrichtung in Verbindung. In einer entsprechend konfigurierten Auswerte- und Steuereinrichtung können dann die Messergebnisse ausgewertet werden, wobei die Beträge und/oder Phasen von vorwärts und rückwärts laufenden Wellen erfasst und die Messergebnisse in Algorithmen zur Steuerung der HF-Erzeugung herangezogen werden.

So kann zum Beispiel steuerungstechnisch eine Überwachungseinrichtung derart konfiguriert werden, dass dadurch der Leistungstransistor in der HF-Erzeugungseinheit vor einer zu hohen Spannungsbelastung durch rückwärts laufende HF-Wellen geschützt wird. Auf die bislang zu diesem Zweck eingesetzten Zirkulatoren kann somit verzichtet werden.

Weiterhin kann durch diese Ausgestaltung insgesamt eine Dosierung und vom Zustand des Behandlungsgutes abhängige Steuerung der Mikrowellenbeaufschlagung vorgenommen werden. Dadurch können Beträge sowie ggf. auch Phasen der vorwärts und zum Beispiel aufgrund von Reflektion rückwärts laufenden Wellen gemessen werden, wodurch auf das Behandlungsergebnis in vorteilhafter Weise Einfluss ausgeübt werden kann.

Die Herstellung einer erfindungsgemäß ausgebildeten Einrichtung zur Hochfrequenzerzeugung kann in großen Stückzahlen mit üblichen und verbreiteten Elektronik-Serienproduktionsmitteln ermöglicht werden. Kostenträchtige Zusatztechnologien und spezielle Bauelemente, wie zum Beispiel Leiterplatten mit relativ dick ausgebildeten Kupferschichten oder mit gegenüber den üblichen Trägermaterialien (FR4) speziellen Materialien, wie zum Beispiel Teflon, können vermieden werden. Zudem kann die notwendige Wärmeabfuhr insbesondere für die Leistungstransistoren durch einfache Kühlkörperkonstruktionen mit einfachen und kostengünstigen Mitteln sichergestellt werden.

Für die Leitung der HF-Wellen werden auf der Leiterplatte und den im Leitungsweg befindlichen Metallteilen übliche Leiterplattenleitungen verwendet, die in bekannter Weise als Streifenleitungen ausgebildet sein können. In einer vorteilhaften Ausführungsform kommen für bestimmte Leitungswege auch invertierte Mikrostreifenleitungen zum Einsatz. Diese Mikrostreifenleitungen verursachen geringe Verluste und sind zudem kostengünstig herstellbar.

Im Hohlleiter können dissipative Materialien angebracht werden, um die über den Hohlleiter zurücklaufenden HF-Wellen zu dämpfen. Damit kann zusätzlich noch der Überlastungsschutz für den Leistungstransistor verbessert werden.

In einer weiteren Ausführungsform kann ergänzend zu den vorbeschriebenen Maßnahmen die Einrichtung zur Erzeugung von HF-Wellen mit einem Temperatursensor ausgerüstet werden, der in Verbindung mit der Steuer- und Überwachungseinrichtung dafür sorgt, dass der verhältnismäßig teuere Leistungstransistor nicht beschädigt wird.

Ein vorteilhafter Nebeneffekt lässt sich noch dadurch erreichen, dass der Endstufenleistungstransistor leicht austauschbar auf der Leiterplatte bzw. an einem mit der Leiterplatte verbundenen Gehäuseteil des Hohlleiters oder auch an einem Teil eines Kühlkörpers befestigt werden kann, so dass im Fehlerfall eine günstige Reparaturmöglichkeit geschaffen wird.

Ein Ausführungsbeispiel der Erfindung ist in den Zeichnungen rein schematisch dargestellt und wird nachfolgend näher beschrieben. Es zeigt
- Figur 1: anhand eines vereinfachten Blockschaltbildes die elektronische Hochfrequenz-Erzeuger- und Transmissionseinheit, von der aus die HF-Wellen in den Garraum eines Gargerätes geleitet werden,
- Figur 2: in perspektivischer Ansicht eine erfindungsgemäße Ausgestaltungsform des Hohlleiters in Verbindung mit einem Teil der Leiterplatte, auf dem die Übergangsstruktur für die Einleitung der HF-Wellen in den Hohlleiter angeordnet ist, wobei die Übergangsstruktur von einer Leiterplattenleitung und einem monopolartigen Abstrahlelement gebildet ist,
- Figur 3: die Darstellung wie Figur 2, lediglich ergänzt mit einem Kühlkörper als Wärmeableitungsteil,
- Figur 4: einen Hohlleiter in einer alternativen Ausführungsform in gleicher Darstellungsweise wie Figur 2,
- Figur 5: den Hohlleiter gemäß Figur 4, ebenfalls lediglich ergänzt mit einem Kühlkörper als Wärmeableitungsteil,
- Figur 6: einen Hohlleiter wie in Figur 4, wobei im Hohlleiter neben dem Abstrahlelement zusätzlich eine von mindestens zwei Erfassungselementen gebildete Messvorrichtung zur Erfassung von vorwärts und rückwärts gerichteten Wellen vorgesehen ist,
- Figur 7: einen Hohlleiter in einer Aufbauform wie in Figur 4, wobei ein Abstrahlelement zur Einleitung der HF-Wellen in den Hohlleiter in einer dipolartigen Struktur ausgebildet ist,
- Figur 8: die gleiche Darstellung wie Figur 7, wobei lediglich das Abstrahlelement für die Einkopplung der Hochfrequenzwellen in einer schleifenartigen Struktur ausgebildet ist,
- Figur 9a,: in perspektivischer Teilansicht den Hohlleiter und die Leiterplatte sowie die Befestigung des Leistungstransistor für die Hochfrequenzerzeugung,
- Figur 9b: eine Schnittdarstellung gemäß der in Figur 9a eingezeichneten Schnittlinie S,
- Figur 10: in perspektivischer Ansicht eine weitere Ausführungsart, bei der das Abstrahlelement und die Erfassungselemente der Messvorrichtung auf separaten Leiterplatten angeordnet sind, mit einer dementsprechend abgewandelten, Gehäuseanordnung für den Hohlleiter.

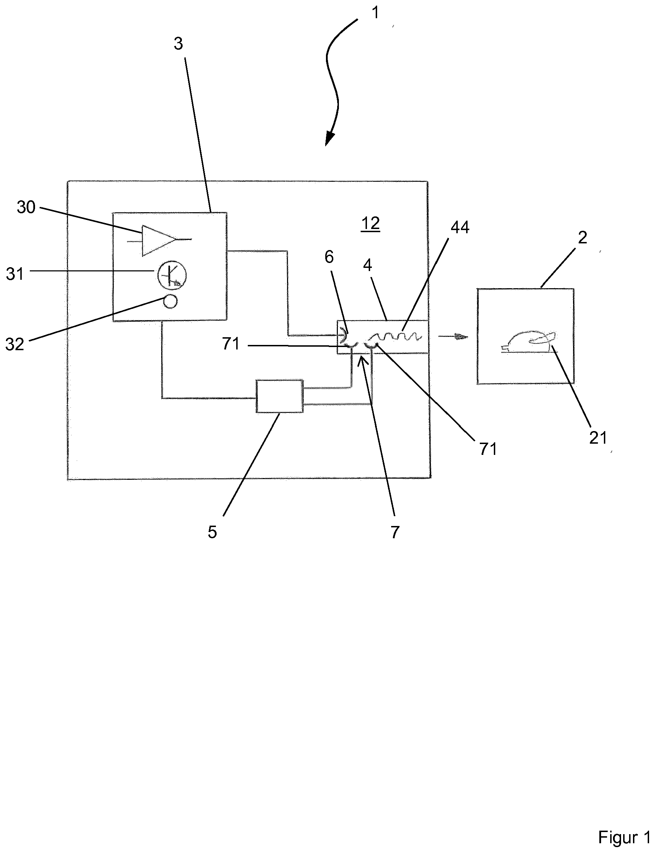

In der **Figur 1** ist in einem vereinfacht gezeichneten Blockschaltbild ein Anwendungsfall dargestellt, bei dem von einer Einrichtung 1 zur Erzeugung und Transmission von Hochfrequenzwellen 44 (HF-Wellen) die Mikrowellenenergie bereitgestellt wird, mittels der im symbolisch gezeichneten Garraum 2 eines Gargerätes das darin befindliche Gargut 21 erhitzt werden soll.

In der Einrichtung 1 zur Erzeugung und Transmission der HF-Wellen 44 sind dabei lediglich die auf einer Leiterplatte 12 angeordneten Baueinheiten aufgeführt, die zur Erläuterung der Erfindung notwendig sind. In der Zeichnung sind zu diesem Zweck deshalb nur die HF-Erzeugungseinheit 3, der Hohlleiter 4 und eine Auswerte- und Steuereinrichtung 5 dargestellt. Dabei sind in der HF-Erzeugungseinheit 3 ein HF-Leistungsverstärker 30 für die Erzeugung hochfrequenter Wellen, ein Leistungstransistor 31 sowie ein Temperatursensor 32 angedeutet.

In symbolisierter Form sind im Hohlleiter 4 ein Abstrahlelement 6 zur Einleitung von HF-Wellen 44 und eine Messvorrichtung 7 in Form von zwei Erfassungselementen 71 dargestellt, mittels der vorwärts und rückwärts laufende Wellen im Hohlleiter 4 nach Betrag und Phase erfasst werden können, und wobei diese Erfassungselemente 71 mit einer Auswerte- und Steuereinrichtung 5 in Verbindung stehen.

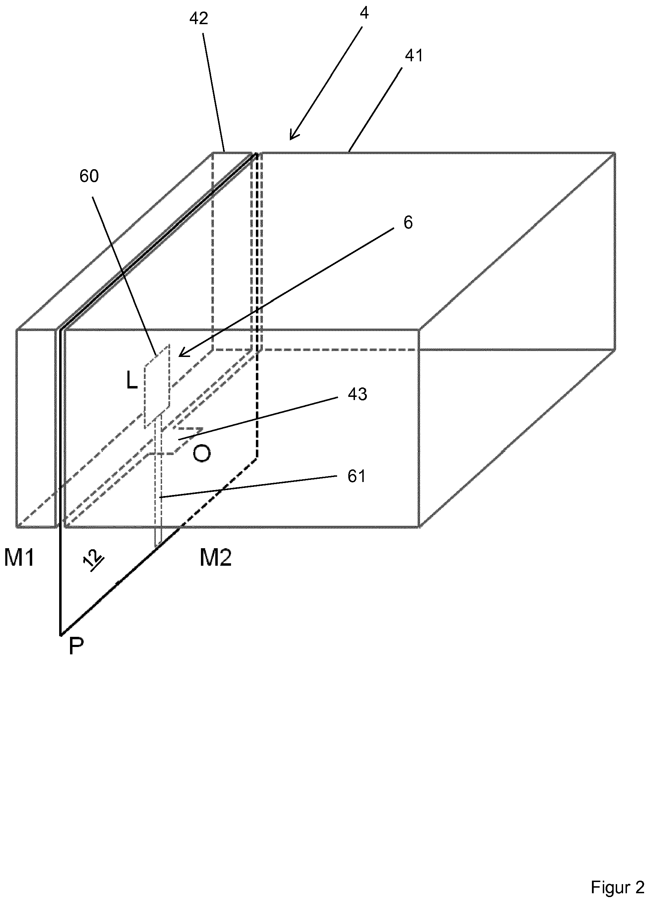

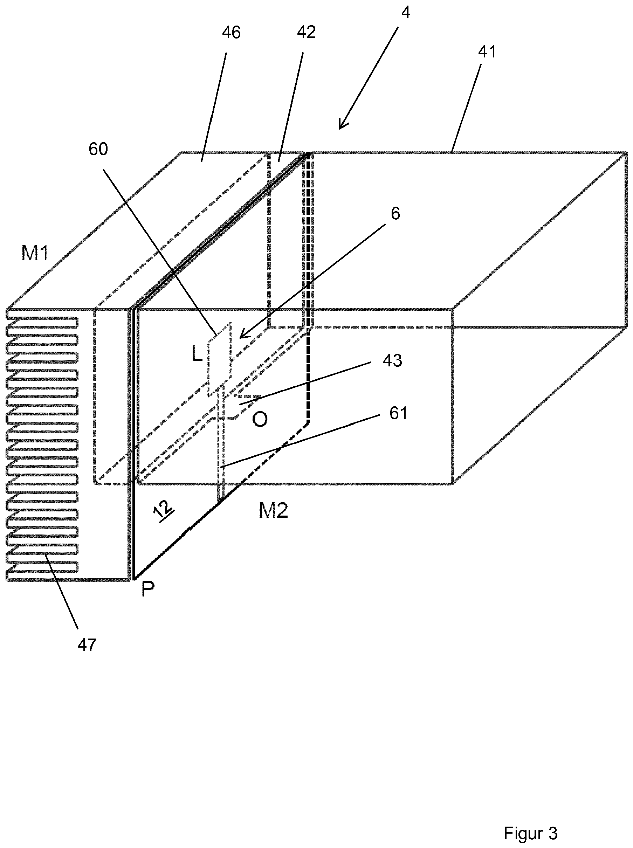

In den **Figuren 2** **und** **3** ist eine erste Ausführungsform wiedergegeben, bei der die prinzipielle Aufbauform für das Gehäuse des Hohlleiters 4 realisiert ist. Bei diesem Ausführungsbeispiel werden die von der HF-Erzeugungseinheit 3 erzeugten HF-Wellen 44 über eine monopolartig ausgebildete Leiterstruktur von der Leiterplatte 12 in den Hohlleiter 4 eingeleitet. In diesem Bereich der Leiterplatte 12 wird somit in Verbindung mit dem Hohlleiter 4 eine HF-Übergangsstruktur von einem Leiterplattenleitungsmode zu einem Hohlleitermode gebildet.

Das Gehäuse des Hohlleiters 4 besteht aus Metall und besitzt vorzugsweise eine rechteckige Hohlstruktur. Das Gehäuse weist zwei Gehäuseteile 41, 42 auf, die mit der Leiterplatte 12 verbunden sind und wobei die Gehäuseteile 41, 42 den Bereich der Leiterplatte 12 mit der HF-Übergangsstruktur umschließen.

Hierzu wird bei diesem Ausführungsbeispiel eine Leiterplattenleitung 61 verwendet, die über eine in einem der Gehäuseteile 41 angeordnete Öffnung 43 zu einem monopolartig ausgebildeten Abstrahlelement 6 führt, um die von der HF-Erzeugungseinheit 3 erzeugten HF-Wellen 44 in den Hohlleiter 4 zu leiten. Bei dieser Ausführungsart ist die Leiterplatte 12 mit der HF-Übergangsstruktur zwischen den beiden Gehäuseteilen 41, 42 quer zur Längsrichtung des Hohlleiters 4 angeordnet. In vorteilhaften Ausführungsformen kann die Leiterplattenleitung 61 in Form von Streifenleitungen ausgebildet sein, die auch als Mikrostreifenleitungen ausgeführt sein können.

Je nach Anwendungsfall und den geräteseitigen Gegebenheiten für den Einbau der HF-Erzeugungseinheit kann die Ausgangsöffnung am Hohlleiter 4 so ausgerichtet und gestaltet werden, dass die HF-Wellen in allen drei Richtungen geleitet werden können. Die Ausgangsöffnung kann somit horizontal, vertikal oder seitlich ausgerichtet werden.

In der **Figur 3** ist die gleiche Ausführungsform wie in Figur 2 gezeigt, wobei hier lediglich an der Leiterplatte 12 mit dem Gehäuseteil 42 des Hohlleiters 4 ein Kühlkörper 46 vorgesehen ist, der für eine ausreichende Wärmeableitung sorgen soll. In bekannter Weise ist der Kühlkörper 46 mit angeformten Kühlrippen 47 ausgebildet. In bevorzugter Ausgestaltung sind das Gehäuseteil 42 und der Kühlkörper 46 einteilig ausgebildet.

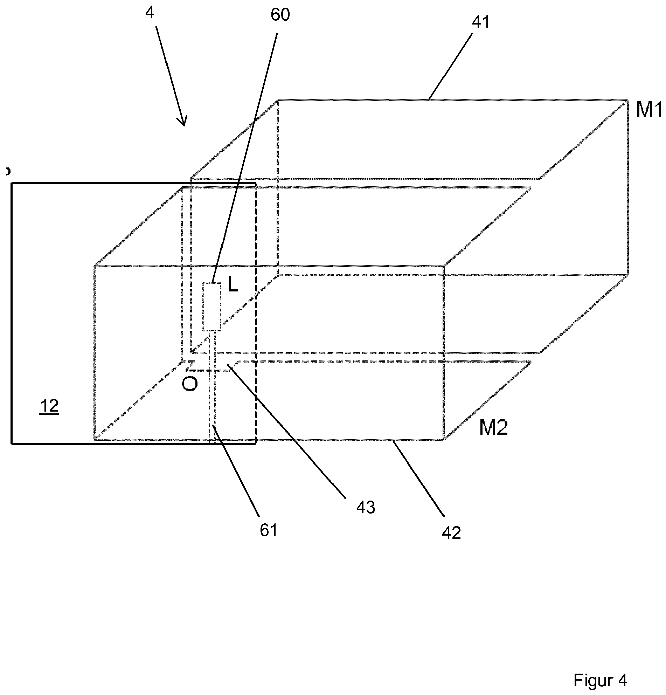

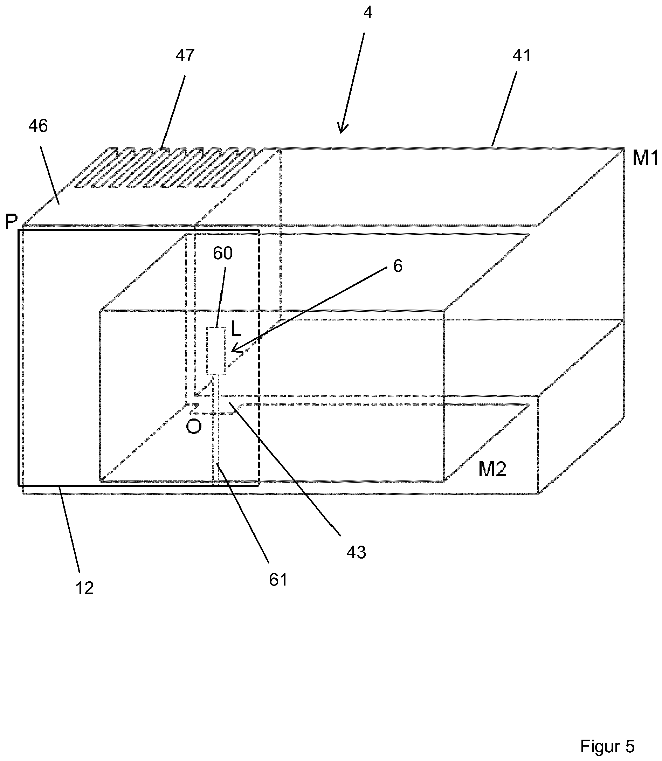

In den **Figuren 4** **und** **5** ist eine Aufbauform gezeigt, bei der gegenüber der Darstellung in den Figuren 2 u. 3 das Gehäuse des Hohlleiters 4 eine abgewandelte Form aufweist und die Leiterplatte 12 mit der HF-Übergangsstruktur in Längsrichtung des Hohlleiters 4 eingefügt ist. Der die HF-Übergangsstruktur tragende Teil der Leiterplatte 12 ist vorzugsweise im mittleren Bereich des Hohlleiters 4 zwischen den beiden Gehäuseteilen 41, 42 angeordnet, wobei dieser Teil in Bezug auf die Wellenausbreitung am Anfang der im Hohlleiter 4 gebildeten Wellenausbreitungsstrecke platziert ist.

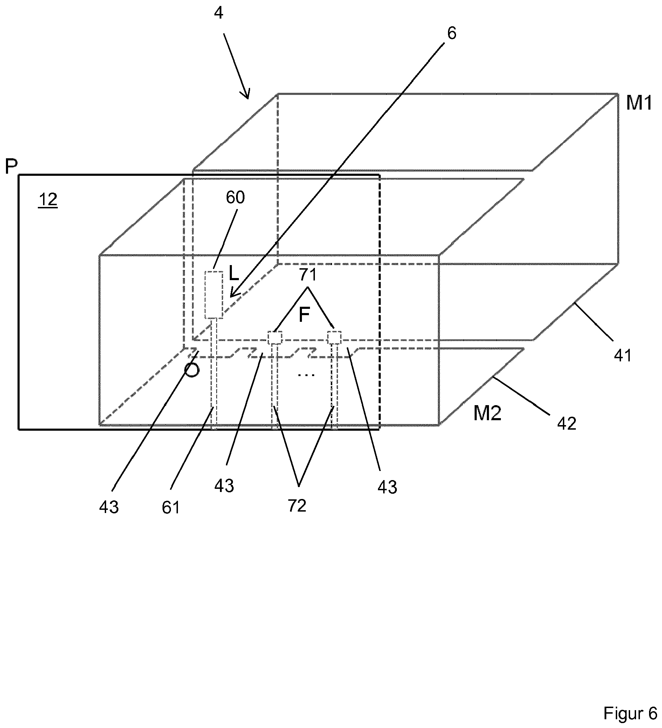

Die **Figur 6** zeigt eine gegenüber den Figuren 1 bis 5 weitergebildete Ausführungsart, wobei im Hohlleiter 4 zusätzlich noch mindestens zwei Erfassungselemente 71 zur Messung vorwärts und rückwärts gerichteter HF-Wellen angeordnet sind. Diese Erfassungselemente 71 stehen über eine jeweils in den Hohlleiter 4 führende Leitung 72 mit einer Auswerte- und Steuereinrichtung 5 in Verbindung. Über Öffnungen 43 in einem Gehäuseteil 42 des Hohlleiters 4 werden diese Leitungen 72 an die Erfassungselemente 71 im Hohlleiter 4 geführt.

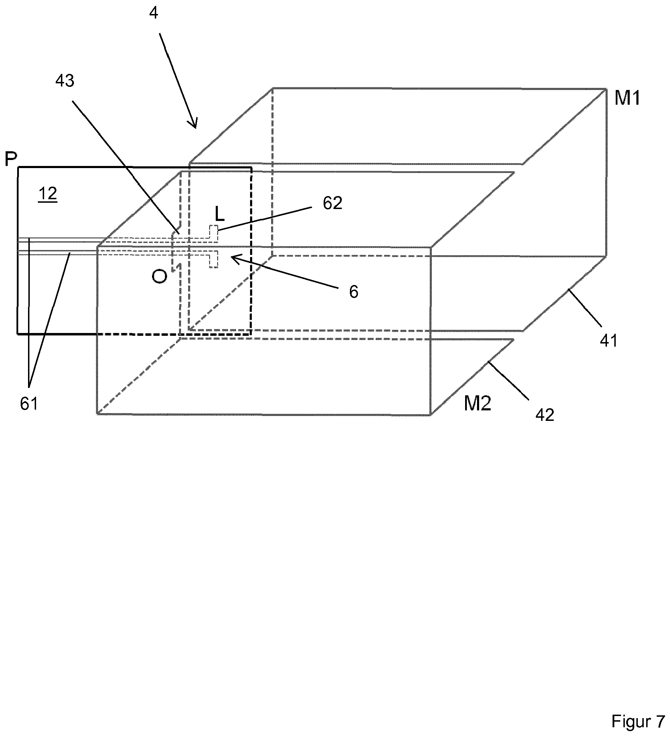

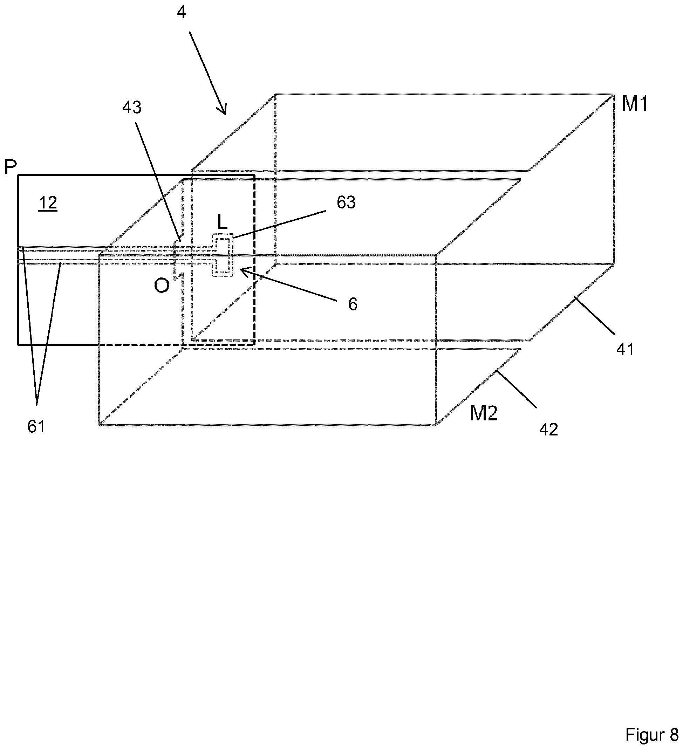

In den **Figuren 7** **und** **8** sind gegenüber den vorbeschriebenen Ausgestaltungsformen weitere Ausführungsformen dargestellt, bei denen eine abgewandelte Form der im Hohlleiter 4 vorgesehenen HF-Übergangsstruktur verwendet wird.

Dabei zeigt die **Figur 7** eine HF-Übergangsstruktur, bei der zur Einleitung der HF-Wellen 44 in den Hohlleiter 4 ein Abstrahlelement 62 mit einer dipolartigen Leiterstruktur vorgesehen ist und die Leiterplattenleitung 61 zu dem Abstrahlelement 62 einen symmetrischen Leitungsmode führt.

In **Figur 8** wurde demgegenüber noch eine Abwandlung des Abstrahlelementes 63 insofern vorgenommen, in dem zur Einleitung der HF-Wellen 44 in den Hohlleiter 4 eine schleifenartige Leiterstruktur für das Abstrahlelement 63 vorgesehen ist, wobei die zu dem Abstrahlelement 63 führende Leiterplattenleitung 61 ebenfalls einen symmetrischen Leitungsmode führt.

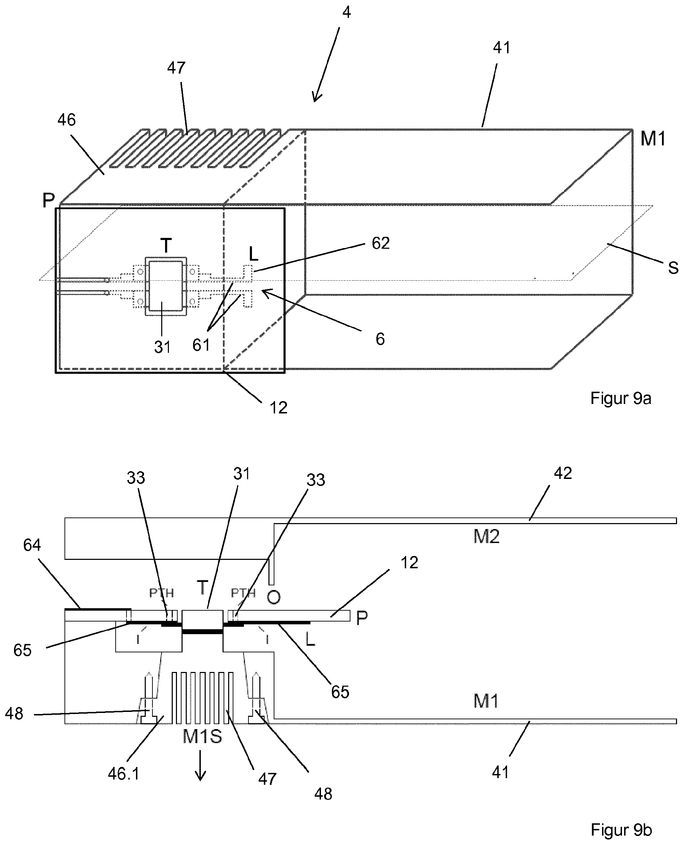

Die **Figur 9** zeigt ein Ausführungsbeispiel, bei dem die Befestigung des Leistungstransistors 31 im Vordergrund steht und wodurch dessen erleichterte Austauschbarkeit im Reparaturfall ermöglicht werden soll. In der **Figur 9a** ist dabei der Hohlleiter 4 nur mit seinem Gehäuseteil 41 sowie mit der den Leistungstransistor 31 tragenden Leiterplatte 12 und ohne das Gehäuseteil 42 dargestellt. Die **Figur 9b** ist eine Darstellung, mit der ein Schnitt durch den Hohlleiter 4 gemäß Figur 9a entlang der darin angedeuteten Schnittlinie S wiedergegeben wird.

Der Leistungstransistor 31 des HF-Leistungsverstärkers 30 kann in üblicher Weise durch eine Lötverbindung auf der Leiterplatte 12 befestigt werden, jedoch hat die in den Figuren 9a u. 9b gezeigte Ausführungsform den Vorteil, dass der Leistungstransistor 31 lösbar an der Leiterplatte 12 oder alternativ an einem an der Leiterplatte 12 angeordneten Kühlkörper 46 befestigt ist.

Eine dementsprechend zweckmäßige Ausgestaltungsform zeigt in anschaulicher Weise die **Figur 9b****.** Der Leistungstransistor 31 ist hier beispielsweise über Lötverbindungen mit den für seinen elektrischen Anschluss auf der Leiterplatte 12 entsprechend vorgesehenen Leitungen verbunden. Die Lötstellen sind dabei über in der Leiterplatte 12 vorgesehene Öffnungen 33 zugänglich, so dass dadurch das Herstellen und auch das Lösen der Lötverbindung möglich ist. Im vorliegenden Ausführungsbeispiel ist der Leistungstransistor 31 an einem über die angedeuteten Schrauben 48 lösbaren Teil 46.1 des mit dem Gehäuseteil 41 verbundenen Kühlkörpers 46 befestigt und sein Masseanschluss kann an dem Gehäuseteil 46.1 hergestellt werden. Im Reparaturfall kann der Leistungstransistor 31 somit nach dem Auflösen der Lötverbindung und dem Lösen der Schrauben 48 mitsamt des Teils 46.1 des Kühlkörpers von der Leiterplatte 12 entfernt und ausgetauscht werden.

Durch diese Ausgestaltungsform ist es möglich, dass zum Auswechseln des Transistors die Lötverbindungen über die von durchkontaktierten Bohrlöchern gebildeten Öffnungen 33 in der Leiterplatte 12 gelöst werden können. Alternativ besteht bei dieser Anordnung auch die Möglichkeit, den Transistor mit dem Gehäuseteil 46.1 im Verbund auszuwechseln oder den Transistor mittels Schraubverbindungen an der Leiterplatte 12 zu befestigen.

Bei dem in Figur 9b dargestellten Ausführungsbeispiel ist zu erkennen, dass die auf der Leiterplatte 12 angeordnete Streifenleitung 64 direkt vor und hinter dem Anschluss des Leistungstransistors 31 als invertierte Mikrostreifenleitungen 65 ausgebildet ist. Diese Mikrostreifenleitungen verursachen geringe Verluste und sind zudem kostengünstig herstellbar.

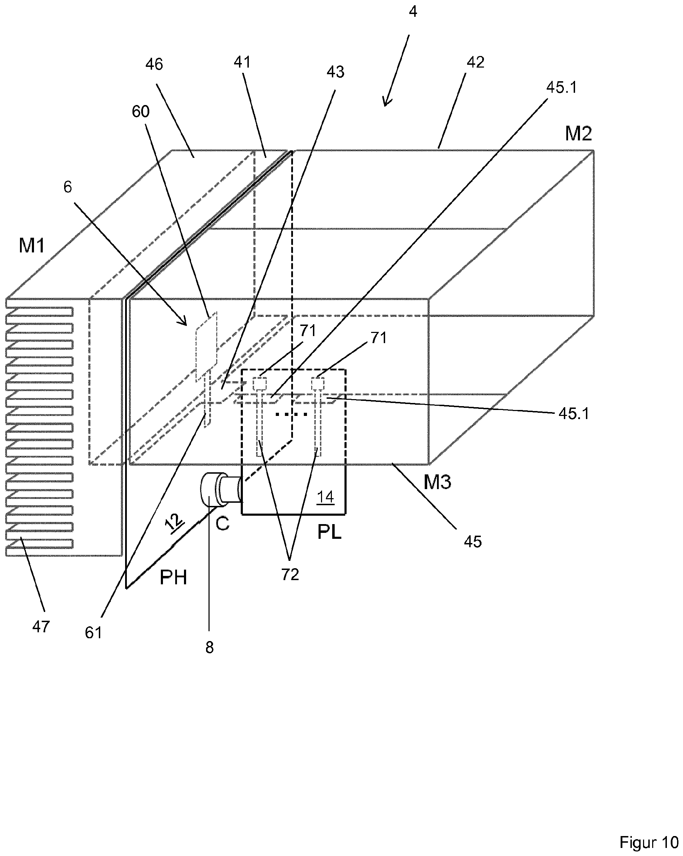

In **Figur 10** ist eine weitere Ausführungsform für eine Einrichtung zur Erzeugung und Transmission von Hochfrequenzwellen gezeigt, bei der das Abstrahlelement 6 und die Erfassungselemente 71 auf separaten Leiterplatten 12 und 14 angebracht sind. Weiterhin wird in diesem Fall das Gehäuse für den Hohlleiter 4 von drei Gehäuseteilen 41, 42 und 43 gebildet. Diese Gehäuseteile werden - wie in der Zeichnung gezeigt - so zusammengesetzt, dass die Leiterplatte 12 mit der HF-Übergangsstruktur und die Leiterplatte 14 mit den Erfassungselementen 71 an unterschiedlichen Stellen im Hohlleiter 4 platziert werden können. Durch diese alternative Aufbauform wird der Vorteil erzielt, dass gegenüber der Leiterplatte 12 mit der HF-Übergangsstruktur für die Anordnung der Erfassungselemente 71 kostengünstigere Leiterplatten eingesetzt werden können.

Durch die Ausführungsform gemäß Figur 10 ist es in vorteilhafter Weise möglich, dass nur die die HF-Erzeugungseinheit 3 tragende Leiterplatte 12 in einer Hochleistungsausführung herzustellen ist, während für die die Messvorrichtung und ggfs. weitere Niederleistungsschaltungen tragende Leiterplatte 14 auch nur eine Niederleistungsausführung notwendig ist.

Das Gehäuse für den Hohlleiter 4 ist bei der hier gezeigten Ausgestaltungsform der Struktur nach eine Kombination aus den in den Figuren 2 bis 9 dargestellten Ausführungsbeispielen für das Hohlleitergehäuse. Die die HF-Erzeugungseinheit 3 tragende Leiterplatte 12 ist dabei mit dem Bereich der HF-Übergangsstruktur quer zwischen dem Gehäuseteil 41 und den beiden in Längsrichtung ausgerichteten Gehäuseteilen 42 u. 45 angeordnet, während die die Messvorrichtung mit den Erfassungselementen 71 tragende Leiterplatte 14 zwischen den Gehäuseteilen 42 u. 45 platziert ist. In dem Gehäuseteil 45 sind ebenfalls Öffnungen 44 für die zu den Erfassungselementen 71 führenden Leitungen 72 vorgesehen. Über den in der Zeichnung angedeuteten Koaxial-Leiterplattenverbinder 8 können die beiden Leiterplatten 12 u. 14 miteinander verbunden werden.

Der im Zusammenhang mit der Figur 1 bereits erwähnte Temperatursensor 32 wird möglichst nah am Leistungstransistor 31 platziert. Damit kann eine Temperaturmessung mit einer sicheren Überwachung und Begrenzung der Transistorbelastung realisiert werden.

Der Hohlleiter 4 kann weiterhin mit dissipativen Materialien versehen sein, die in bekannter Weise HF-Energie in Wärme umsetzen. Damit dabei keine zu großen, lokalen Temperaturen entstehen, setzen die Materialien die Energie möglichst räumlich verteilt in Wärme um. Beispielsweise können die Hohleiterinnenwände teilweise mit einer Schicht aus dissipativen Material belegt werden. Dies kann durch eine Lackschicht oder durch aufgeklebte oder per Klipsverbindung angebrachte Kunststoffteile realisiert werden. Diese zusätzlich eingebauten Verlustelemente helfen ebenfalls, den Leistungstransistors 31 vor zu starken elektrischen Spannungen durch rückwärts gerichtete HF-Wellen zu schützen.

Die für die Leitung der HF-Wellen verwendeten Leiterplattenleitungen werden in vorteilhafter Weise als invertierte Mikrostreifenleitungen ausgeführt. Diese sind kostengünstig und verursachen relativ geringe Verluste.

Durch die erfindungsgemäß vorgesehene Aufbauform des Hohlleiters 4, der darin angeordneten HF-Übergangsstruktur von einer Leiterplattenleitung zu einer Hohlleitung, mit der darin vorgesehenen Messvorrichtung für vorwärts und rückwärts gerichtete HF-Wellen 44 sowie in Verbindung mit einer Auswerte- und Steuereinrichtung 5 können mit den vorstehend beschriebenen Schutzmassnahmen für den Leistungstransistor 31 die ansonsten üblichen und aus dem Stand der Technik bekannten Zirkulatoren vermieden werden. Dadurch lässt sich insgesamt eine nicht unerhebliche Kostenreduzierung erzielen.

Um zu große elektrische Spannungen und Belastungen am Transistor zu vermeiden, die durch starke, zum Leistungstransistor 31 rückwärts laufende HF-Wellen entstehen können und um zu große Temperaturen und thermische Belastungen am Leistungstransistor 31 zu vermeiden, kann mit der vorbeschriebenen, erfindungsgemäßen Ausgestaltung in zweckmäßiger Weise ein Verfahren realisiert werden, welches folgende Verfahrensschritte aufweist:
- In einem ersten Zeitabschnitt wird der Leistungstransistor 31 mit einer derart niedrig bemessenen Ausgangsspannung der HF-Wellen betrieben, die in einem vorbestimmten Abstand unterhalb des für den Leistungstransistors 31 maximal zulässigen Wertes liegt,
- dabei werden mit den im Hohlleiter 4 angeordneten Erfassungselementen 71 die vorwärts und rückwärts laufenden HF-Welle gemessen, und die Messergebnisse werden in Algorithmen zur Steuerung der HF-Erzeugung ausgewertet,
- unter der Annahme, dass sich die HF-Erzeugungseinheit 3 und der mit den HF-Wellen 44 beaufschlagte Behandlungsraum als Last (z. Beisp. Garraum 2) linear verhalten und sich nicht über einen vorbestimmten Zeitabschnitt ändern,
   antizipiert ein Algorithmus die am Ausgang des Leistungstransistors 31 auftretende Spannung, wenn dieser mit höheren Eingangsspannungen betrieben würde,
- und davon abhängig wird ermittelt, ob und mit welch höheren Eingangsspannungen der Leistungstransistor 31 in einem zweiten (längeren) Zeitabschnitt betrieben werden kann, ohne dass eine Überbelastung des Leistungstransistors 31 erfolgt.

Bei der Feststellung der maximal zulässigen Eingangsspannung zur Steuerung des Leistungstransistors 31 kann weiterhin die von dem Temperatursensor 32 ermittelte Temperatur berücksichtigt werden. Damit kann die Eingangsspannung am Leistungstransistor 31 temperaturabhängig gesteuert werden. Dadurch wird eine gewisse Sicherheit geschaffen, da der Leistungstransistor 31 zum Beispiel bei einer aktuell bereits schon relativ hohen Temperatur demgegenüber nur noch mit einer niedrigeren Eingangsspannung betrieben werden darf.

### Bezugszeichenliste:

1. Einrichtung zur Erzeugung und Transmission von Hochfrequenzwellen (HF-Wellen)
   12 Leiterplatte, mit HF-Erzeugungseinheit
   14 Leiterplatte, mit Messvorrichtung
2. Garraum eines Gargerätes
   21 Gargut
3. HF-Erzeugungseinheit
   30 Leistungsverstärker für die Verstärkung hochfrequenter Wellen
   31 Leistungstransistor, Endstufentransistor
   32 Temperatursensor
   33 Öffnungen in der Leiterplatte (durchkontaktierte Bohrlöcher)
4. Hohlleiter
   41 Gehäuseteil (I)
   42 Gehäuseteil (II)
   43 Öffnung in einem Gehäuseteil
   44 Hochfrequenzwellen (HF-Wellen) im Hohlleiter
   45 Gehäuseteil (III), 45.1 Öffnung im Gehäuseteil (45)
   46 Kühlkörper; 46.1 Lösbarer Teil des Kühlkörpers
   47 Kühlrippen
   48 Schrauben
5. Auswerte- und Steuereinrichtung
6. Abstrahlelement
   60 Abstrahlelement in monopolartiger Leiterstruktur
   61 Leiterplattenleitung vom HF-Erzeuger zum Abstrahlelement (Launcher)
   62 Abstrahlelement in dipolartige Leiterstruktur
   63 Abstrahlelement in schleifenartiger Leiterstruktur
   64 Streifenleitung
   65 invertierte Mikrostreifenleitung
7. Messvorrichtung für vorwärts und rückwärts laufende HF-Wellen
   71 Erfassungselemente
   72 Leitungen zu den Erfassungselementen
   73 Aussparungen in der Leiterplatte (14)
8. Koaxial-Leiterplattenverbinder

## Patentansprüche

1. Einrichtung zur Erzeugung und Transmission von Hochfrequenz- (HF) -Wellen (44), die durch eine HF-Erzeugungseinheit (3) erzeugt werden und die über einen Hohlleiter (4) in den Behandlungsraum eines Gerätes geleitet werden, um darin befindliches Behandlungsgut mit Mikrowellenenergie zu beaufschlagen,
**dadurch gekennzeichnet,**
- **dass** die Einrichtung eine Leiterplatte (12) und einen Hohlleiter (4) umfasst,
- **dass** der Hohlleiter (4) von einem Gehäuse aus Metall gebildet wird, welches mindestens zwei Gehäuseteile (41, 42) aufweist und wobei das Gehäuse des Hohlleiters (4) mit der Leiterplatte (12) verbunden ist,
- **dass** auf der Leiterplatte (12) eine einen Leistungstransistor (31) umfassende Schaltungsanordnung zur Erzeugung von HF-Wellen (44) sowie eine in den Hohlleiter (4) führende HF-Leitungsstruktur angeordnet ist,
- **dass** die HF-Leitungsstruktur eine HF-Übergangsstruktur aufweist, die einen Leiterplattenleitungsmode in einen Hohlleitermode überführt, um HF-Wellen (44) in den Hohlleiter (4) einzuleiten,
- und **dass** die Leiterplatte (12) mit der HF-Übergangsstruktur zwischen den Gehäuseteilen (41, 42, 45) des Hohlleiters (4) platziert ist.

2. Einrichtung nach Anspruch 1,
**dadurch gekennzeichnet,**
**dass** die in den Hohlleiter (4) führende HF-Leitungsstruktur eine Leiterplattenleitung (61) und mindestens ein Abstrahlelement (6) zur Einleitung der HF-Wellen in den Hohlleiter (4) umfasst.

3. Einrichtung nach Anspruch 1 oder 2,
**dadurch gekennzeichnet,**
**dass** im Hohlleiter (4) mindestens zwei Erfassungselemente (71) zur Messung vorwärts und rückwärts gerichteter HF-Wellen angeordnet sind,
wobei diese Erfassungselemente (71) jeweils über eine in den Hohlleiter (4) führende Leitung (72) mit einer Auswerte- und Steuereinrichtung (5) in Verbindung stehen,
und **dass** die Auswerte- und Steuereinrichtung (5) derart konfiguriert ist,
**dass** Messungen von Beträgen und/oder Phasen von vorwärts und rückwärts laufenden Wellen durchführbar sind und die Messergebnisse in Algorithmen zur Steuerung der HF-Erzeugung auswertbar sind.

4. Einrichtung nach Anspruch 2 oder 3,
**dadurch gekennzeichnet,**
**dass** die zu den im Hohlleiter (4) befindlichen Abstrahl- und Erfassungselementen (6, 71) führenden Leiterplattenleitungen (61, 72) jeweils über eine Öffnung (43, 45.1) in einer Wand des Hohlleiters (4) in das Innere des Hohlleiters einmünden.

5. Einrichtung nach einem der Ansprüche 1 bis 4,
**dadurch gekennzeichnet,**
**dass** zur Einleitung der HF-Wellen (44) in den Hohlleiter (4) ein Abstrahlelement (60) mit einer monopolartigen Leiterstruktur vorgesehen ist.

6. Einrichtung nach Anspruch 5,
**dadurch gekennzeichnet,**
**dass** die Leiterplattenleitung (61) zu dem Abstrahlelement (60) einen asymmetrischen Leitungsmode führt.

7. Einrichtung nach einem der Ansprüche 1 bis 4,
**dadurch gekennzeichnet,**
**dass** zur Einleitung der HF-Wellen (44) in den Hohlleiter (4) ein Abstrahlelement (62) mit einer dipolartigen Leiterstruktur vorgesehen ist.

8. Einrichtung nach einem der Ansprüche 1 bis 4,
**dadurch gekennzeichnet,**
**dass** zur Einleitung der HF-Wellen (44) in den Hohlleiter (4) ein Abstrahlelement (63) mit einer schleifenartigen Leiterstruktur vorgesehen ist.

9. Einrichtung nach Anspruch 7 oder 8,
**dadurch gekennzeichnet,**
**dass** die Streifenleitung (61) zu dem Abstrahlelement (63) einen symmetrischen Leitungsmode führt.

10. Einrichtung nach einem der vorhergehenden Ansprüche 1 bis 9 ,
**dadurch gekennzeichnet,**
**dass** die aus dem Abstrahlelement (6) und der Leiterplattenleitung (61) gebildete HF-Übergangsstruktur und die Erfassungselemente (71) für die Messung vorwärts und rückwärts gerichteter HF-Wellen (44) jeweils auf separaten, leitungstechnisch miteinander verbindbaren Leiterplatten (12, 14) angeordnet sind, und dass diese Leiterplatten (12, 14) an unterschiedlichen Stellen in den Hohlleiter (4) eingefügt sind.

11. Einrichtung nach einem oder mehreren der Ansprüche 1 bis 10,
**dadurch gekennzeichnet,**
**dass** der Leistungstransistor (31) des HF-Leistungsverstärkers (30) lösbar auf der Leiterplatte (12) oder an einem an der Leiterplatte (12) oder am Gehäuse des Hohlleiters (4) lösbar angeordneten Gehäuseteil (41) befestigt ist, und dass in der Leiterplatte (12) Öffnungen (33) vorgesehen sind, über die die Befestigungs- und Anschlussstellen am Leistungstransistor (31) für dessen Montage bzw. Demontage zugänglich sind.

12. Einrichtung nach einem oder mehreren der vorhergehenden Ansprüche,
**dadurch gekennzeichnet,**
**dass** zur Erfassung der Temperatur des Leistungstransistors (31) ein Temperatursensor (32) vorgesehen ist,
und **dass** der Temperatursensor (32) mit einer Überwachungseinrichtung in Verbindung steht, durch die eine erhöhte Transistorbelastung vermieden wird.

13. Einrichtung nach einem oder mehreren der vorhergehenden Ansprüche,
**dadurch gekennzeichnet,**
**dass** die Leiterplatte (12) mit der HF-Erzeugungseinheit (3) für die Leitung der HF-Wellen Leiterplattenleitungen (61) umfasst, und dass vor und hinter dem Leistungstransistor (31) die Leiterplattenleitungen (61) als invertierte Mikrostreifenleitungen (65) ausgebildet sind.

14. Einrichtung nach einem der vorhergehenden Ansprüche ,
**dadurch gekennzeichnet,**
**dass** im Hohlleiter (4) dissipative Materialien angebracht sind, um die über den Hohlleiter (4) rückwärts laufenden HF-Wellen zu dämpfen und um dadurch eine Überlastung am Leistungstransistor (31) zu vermeiden.

15. Gerät zur Nahrungsmittelaufbereitung, zum Garen von Gargut, zum Trocknen eines Behandlungsgutes oder Gerät, welches für den Einsatz im medizinischen Bereich vorgesehen ist,
**dadurch gekennzeichnet,**
**dass** das Gerät eine Einrichtung zur Erzeugung und Transmission von Hochfrequenz- (HF) - Wellen (44) mit den Merkmalen eines der Ansprüche 1 bis 12 umfasst.

16. Verfahren zur Steuerung und zum Betreiben einer Einrichtung zur Erzeugung und Transmission von Hochfrequenz- (HF) -Wellen (44) gemäß einem der Ansprüche 1 bis 12, **dadurch gekennzeichnet,**
**dass** das Verfahren folgende Verfahrensschritte umfasst:
- In einem ersten Zeitabschnitt wird der Leistungstransistor (31) mit einer Ausgangsspannung der HF-Wellen (44) betrieben, die den für den Leistungstransistor (31) maximal zulässigen Wert nicht überschreitet,
- dabei werden mit im Hohlleiter (4) angeordneten Erfassungselementen (71) die Beträge und/oder die Phasen der vorwärts und rückwärts laufenden HF-Wellen (44) gemessen, und die Messergebnisse werden in Algorithmen zur Steuerung der HF-Erzeugung ausgewertet,
- unter der Annahme, dass sich die HF-Erzeugungseinheit (3) und der mit den HF-Wellen (44) beaufschlagte Behandlungsraum als Last linear verhalten,
und **dass** sich diese Zustandsverhältnisse über einen vorbestimmten Zeitabschnitt nicht in einer für den Leistungstransistor (31) belastungskritischen Weise ändern, antizipiert ein Algorithmus die am Ausgang des Leistungstransistors (31) auftretende Spannung, wenn dieser mit einer höheren Eingangsspannung betrieben würde,
- und davon abhängig wird ermittelt, ob und mit welch höheren Eingangsspannungen der Leistungstransistor (31) in weiteren Zeitabschnitten betrieben werden kann,
ohne dass eine Überbelastung des Leistungstransistors (31) erfolgt.
